# EUROPEAN PATENT APPLICATION

(11) **EP 3 015 519 A1**
(43) Date of publication of application: **04.05.2016**
(21) Application number: 14816926.1
(22) Date of filing: 25.06.2014
(51) Int. Cl.: C09J 7/02, B32B 27/00, C09J 201/00

(54) **ADHESIVE TAPE FOR PREVENTING AQUATIC BIOFOULING**

(30) Priority: 26.06.2013 JP 2013133356; 23.06.2014 JP 2014128106
(71) Applicant: Nitto Denko Corporation, Ibaraki-shi, Osaka 567-8680 (JP)
(72) Inventor: KURATA, Naoki, Ibaraki-shi Osaka 567-8680 (JP); NAITO, Tomonari, Ibaraki-shi Osaka 567-8680 (JP); SUEYOSHI, Taiki, Ibaraki-shi Osaka 567-8680 (JP); SUZUKI, Satoru, Ibaraki-shi Osaka 567-8680 (JP); DOI, Asami, Ibaraki-shi Osaka 567-8680 (JP); SHIMIZU, Hisae, Ibaraki-shi Osaka 567-8680 (JP)
(74) Representative: Müller-Boré & Partner Patentanwälte PartG mbB
(86) International application number: PCT/JP2014/066832
(87) International publication number: WO 2014/208595

(57) **Abstract**

Provided is a pressure-sensitive adhesive tape for preventing adhesion of aquatic organisms, which can express good adhesion even in water, has good mechanical characteristics, facilitates its peeling operation, can maintain an antifouling effect over a long time period, has a small load on a human body or an environment, has a light weight, can maintain stable quality, and can effectively prevent adhesion of aquatic organisms. The pressure-sensitive adhesive tape for preventing adhesion of aquatic organisms of the present invention includes an antifouling layer, a base material layer, and a pressure-sensitive adhesive layer in the stated order, in which: the antifouling layer includes a silicone resin; the antifouling layer includes an antifouling agent; the antifouling agent essentially includes a silicone oil and a liquid paraffin; and the antifouling agent includes at least one kind selected from a surfactant, a liquid hydrocarbon, a fluorinated oil, and an antimicrobial agent.

## Description

### Technical Field

The present invention relates to a pressure-sensitive adhesive tape for preventing adhesion of aquatic organisms. More specifically, the present invention relates to a pressure-sensitive adhesive tape for preventing adhesion of aquatic organisms for preventing aquatic organisms from adhering to an underwater structure (such as a ship, a buoy, a harbor facility, a maritime oil field facility, a waterway for power plant cooling water, a waterway for factory cooling water, or a water floating passage) to proliferate.

### Background Art

A marine organism such as a barnacle, an oyster, a blue mussel, a hydra, a serpula, a sea squirt, a moss animal, a sea lettuce, green laver, or attached diatom has been adhering to a portion of an underwater structure such as a ship in contact with seawater to proliferate, thereby causing an unpreferred state such as a reduction in facility mechanical performance, e.g., an increase in fluid resistance or a reduction in thermal conductivity, or diffusion of the adhering marine organism to overseas. In addition, an operation of removing the adhering marine organism requires a great deal of labor and an enormous amount of time, which results in economic loss.

Hitherto, the underwater structure has been painted with an antifouling paint in order to prevent such damage as described above. The antifouling paint contains a toxic antifouling agent, which, for example, was formerly an organotin compound and is currently cuprous oxide. Although adhesion and growth of the marine organism can be suppressed almost completely by the toxicity of the antifouling paint, the toxic antifouling agent such as the organotin compound or cuprous oxide causes a serious problem in the long run because the agent adversely affects a human body or an environment to no small extent. In addition, when the antifouling paint is dried after its painting, about 30 wt% of an organic solvent (VOC) volatilizes to adversely affect a work environment or a surrounding environment. In spray-type painting, in addition to discharge of the VOC to the atmosphere, 10 wt% to 20 wt% of the paint is said to be scattered to the surroundings by the wind. Meanwhile, when the structure painted with the antifouling paint that has been used for many years is repainted with a new one, the antifouling paint that has become old is peeled with a sandblast or a metal grinder. At that time, however, a large amount of coating film pieces each containing the toxic antifouling agent such as the organotin compound or cuprous oxide are scattered to the surroundings to adversely affect an operator or the environment. In addition, the peeled antifouling paint is treated as industrial waste. Accordingly, the paint has been causing a major problem.

As described above, the conventional antifouling paint has an inhibiting effect on the adhesion of marine organisms, but adversely affects the human body or the environment to a large extent, which still has many unsolved problems to the present date.

Accordingly, there has been proposed a pressure-sensitive adhesive tape formed by bonding a copper foil and a pressure-sensitive adhesive to each other through intermediation of a primer (see Patent Literatures 1 and 2). However, the suppression of the adhesion of marine organisms in such pressure-sensitive adhesive tape is attained by a copper component in the copper foil, and therefore there is a problem in that the tape may adversely affect the environment. In addition, the peel adhesive strength for an FRP plate of such pressure-sensitive adhesive tape is designed to be extremely large, specifically, 2.6 kg/25 mm or 7.5 kg/25 mm (after primer pretreatment). Thus, it is difficult to consider that the pressure-sensitive adhesive tape after use can be easily peeled by human power when the pressure-sensitive adhesive tape is replaced with another tape. In the end, a great deal of labor is needed because an action such as scraping is needed. In addition, copper has a specific weight of 8.94 g/cm³, which is a heavy substance, and the use of copper for a movable structure such as a ship deteriorates fuel efficiency and is not preferred from an economic viewpoint.

In addition, there has been proposed an antifouling tape formed of two layers, i.e., a silicone rubber and a pressure-sensitive adhesive (see Patent Literature 3). However, the silicone rubber layer responsible for an antifouling effect does not contain an antifouling agent such as an oil, and hence is the silicone rubber itself. In the case where the antifouling agent is not contained, the adhesion of marine organisms can be suppressed by the water-repellent property of the silicone rubber for a short time period, but the antifouling effect is not sustained for a long time period. In addition, extreme concern is raised about the strength of such antifouling tape because the tape is formed of two layers, i.e., a silicone rubber and a pressure-sensitive adhesive. In general, the silicone rubber has an extremely low strength at break. Accordingly, the case where such antifouling tape is peeled after use is not realistic because it is difficult to peel the tape while maintaining its tape form.

In addition, there has been proposed a sheet-shaped tape including a silicone elastomer formed on a base material through intermediation of an undercoating agent and a pressure-sensitive adhesive layer formed on the opposite side of the base material (see Patent Literature 4). The sheet-shaped tape disclosed in Patent Literature 4 contains a fluorine-containing liquid compound and/or a hydrophobic silicone-based liquid compound as an antifouling agent. However, the sheet-shaped tape including such antifouling agent cannot express sufficient antifouling performance. In addition, Patent Literature 4 does not have, for example, any description about the composition of a pressure-sensitive adhesive usable in water and about the adhesive strength of the tape, and therefore the application of the tape to a pressure-sensitive adhesive tape for preventing adhesion of aquatic organisms lacks reality. In addition, in the application of an antifouling tape to an underwater structure, the flexibility and elongation property of the tape need to be designed such that the tape can be applied to a curved surface or an acute angle surface. In addition, the strength of the tape needs to be designed such that the base material is prevented from breaking during the peeling of the antifouling tape after use. However, Patent Literature 4 does not have any such description, and therefore the application of the tape to a pressure-sensitive adhesive tape for preventing adhesion of aquatic organisms lacks reality.

### Citation List

### Patent Literature

[PTL 1] JP 63-62487 B2
[PTL 2] JP 01-54397 B2
[PTL 3] JP 3000101 B2
[PTL 4] JP 2002-69246 A

### Summary of Invention

### Technical Problem

An object of the present invention is to provide a pressure-sensitive adhesive tape for preventing adhesion of aquatic organisms, which can express good adhesion even in water, has good mechanical characteristics, facilitates its peeling operation, can maintain an antifouling effect over a long time period, has a small load on a human body or an environment, has a light weight, can maintain stable quality, and can effectively prevent adhesion of aquatic organisms.

### Solution to Problem

A pressure-sensitive adhesive tape for preventing adhesion of aquatic organisms according to one embodiment of the present invention includes an antifouling layer, a base material layer, and a pressure-sensitive adhesive layer in the stated order, in which: the antifouling layer includes a silicone resin; the antifouling layer includes an antifouling agent; the antifouling agent essentially includes a silicone oil and a liquid paraffin; and the antifouling agent includes at least one kind selected from a surfactant, a liquid hydrocarbon, a fluorinated oil, and an antimicrobial agent.

In a preferred embodiment, the base material layer has an elongation of 100% or more and a stress at break of 10 MPa or more.

In a preferred embodiment, the pressure-sensitive adhesive layer has a 180° peel adhesive strength at 23°C and a tensile speed of 300 mm/min of 30 N/20 mm or less.

In a preferred embodiment, when the pressure-sensitive adhesive layer is brought into contact with seawater, a compressive elastic modulus of a portion of the pressure-sensitive adhesive layer brought into contact with seawater is 1.1 times or more as large as a compressive elastic modulus of the pressure-sensitive adhesive layer before the contact with seawater.

### Advantageous Effects of Invention

According to the embodiment of the present invention, the adhesive pressure-sensitive tape for preventing adhesion of aquatic organisms can be provided, which can express good adhesion even in water, has good mechanical characteristics, facilitates its peeling operation, can maintain an antifouling effect over a long time period, has a small load on a human body or an environment, has a light weight, can maintain stable quality, and can effectively prevent adhesion of aquatic organisms.

### Brief Description of Drawings

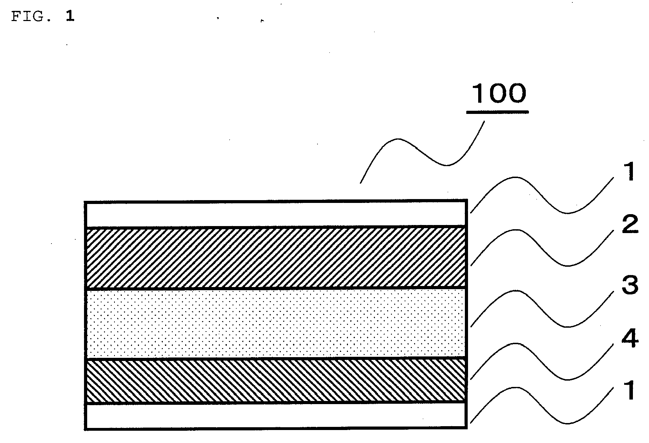

FIG. **1** is a schematic sectional view of an example of a pressure-sensitive adhesive tape for preventing adhesion of aquatic organisms of the present invention.

### Description of Embodiments

A pressure-sensitive adhesive tape for preventing adhesion of aquatic organisms of the present invention includes an antifouling layer, a base material layer, and a pressure-sensitive adhesive layer in the stated order.

The pressure-sensitive adhesive tape for preventing adhesion of aquatic organisms of the present invention may include any appropriate other layer to the extent that the effect of the present invention is not impaired as long as the tape includes the antifouling layer, the base material layer, and the pressure-sensitive adhesive layer in the stated order.

The thickness of the pressure-sensitive adhesive tape for preventing adhesion of aquatic organisms of the present invention is set to any appropriate thickness depending on the thickness of each layer in the tape to the extent that the effect of the present invention is not impaired. The thickness of the pressure-sensitive adhesive tape for preventing adhesion of aquatic organisms of the present invention is preferably from 50 µm to 5,000 µm.

FIG. **1** is an illustration of a schematic sectional view of an example of the pressure-sensitive adhesive tape for preventing adhesion of aquatic organisms of the present invention. A pressure-sensitive adhesive tape **100** for preventing adhesion of aquatic organisms of the present invention includes an antifouling layer **2,** a base material layer **3,** and a pressure-sensitive adhesive layer **4** in the stated order. As illustrated in FIG. **1****,** the surface of the antifouling layer **2** or the surface of the pressure-sensitive adhesive layer **4** may be provided with a release film **1.**

The antifouling layer contains the silicone resin. Any appropriate content may be adopted as the content of the silicone resin in the antifouling layer depending on the content of any other component such as an antifouling agent. The content of the silicone resin in the antifouling layer is preferably from 30 wt% to 98 wt%, more preferably from 40 wt% to 97 wt%, still more preferably from 45 wt% to 96 wt%, particularly preferably from 50 wt% to 95 wt%. When the content of the silicone resin in the antifouling layer falls within the range described above, the antifouling layer can express its antifouling effect and mechanical characteristics sufficiently. When the content of the silicone resin in the antifouling layer is less than 30 wt%, the mechanical characteristics of the antifouling layer may be reduced. When the content of the silicone resin in the antifouling layer exceeds 98 wt%, the antifouling layer may not express its antifouling effect sufficiently.

Any appropriate silicone resin may be adopted as the silicone resin to the extent that the effect of the present invention is not impaired. The number of kinds of the silicone resins may be only one, or may be two or more. Such silicone resin may be a silicone resin which is liquid at normal temperature, or may be a silicone resin which is solid at normal temperature. In addition, such silicone resin may be a condensation-type silicone resin, or may be an addition-type silicone resin. In addition, such silicone resin may be a one-component silicone resin to be dried alone, or may be a two-component silicone resin to be compounded with a curing agent.

Of those, a two-component heat addition-type resin is preferred as the silicone resin in the present invention. Examples of such two-component heat addition-type resin include KE-1950-10(A/B), KE-1950-20(A/B), KE-1950-30(A/B), KE-1950-35(A/B), KE-1950-40(A/B), KE-1950-50(A/B), KE-1950-60(A/B), KE-1950-70(A/B), KE-1987(A/B), and KE-1988(A/B) manufactured by Shin-Etsu Chemical Co. , Ltd. , an LR7665 series and an LR3033 series manufactured by Wacker Asahikasei Silicone Co., Ltd., and a TSE3032 series manufactured by Momentive.

In order to improve easy removability of aquatic organisms in the pressure-sensitive adhesive tape for preventing adhesion of aquatic organisms of the present invention, the silicone resin is preferably a silicone resin having the following physical property: the surface of the resin undergoes elastic deformation by virtue of, for example, a water pressure at the time of the removal of the organism by water washing to facilitate the peeling of an adhering substance. Such silicone resin has a 100% modulus (tensile stress) of preferably from 0.1 MPa to 10 MPa, more preferably from 0.1 MPa to 6 MPa. In addition, such silicone resin is preferably soluble in an organic solvent.

The antifouling layer contains an antifouling agent.

The antifouling agent essentially includes a silicone oil, and a liquid paraffin and also includes at least one kind selected from a surfactant, a liquid hydrocarbon, a fluorinated oil and an antimicrobial agent. The number of kinds of each of the silicone oils, the liquid paraffins, the surfactants, the liquid hydrocarbons, the fluorinated oils, and the antimicrobial agent may be only one, or may be two or more. In the case where the antifouling layer contains such antifouling agent, the antifouling agent migrates to the surface of the silicone resin as a matrix to coat the surface with an antifouling substance, and thereby can prevent the adhesion of aquatic organisms to the surface of the silicone resin and express an action of maintaining a high antifouling effect for a long time period. Accordingly, a pressure-sensitive adhesive tape for preventing adhesion of aquatic organisms can be provided, which can maintain an antifouling effect over a long time period, has a small load on a human body or an environment, has a light weight, can maintain stable quality, and can effectively prevent adhesion of aquatic organisms.

When the antifouling layer essentially contains a silicone oil and a liquid paraffin and also contains at least one kind selected from a surfactant, a liquid hydrocarbon, a fluorinated oil, and an antimicrobial agent, the content of the silicone oil with respect to the silicone resin is preferably from 1 wt% to 150 wt%, more preferably from 40 wt% to 150 wt%, still more preferably from 45 wt% to 120 wt%, yet still more preferably from 50 wt% to 100 wt%, even yet still more preferably more than 50 wt% and 100 wt% or less, particularly preferably from 60 wt% to 95 wt%, most preferably from 70 wt% to 90 wt%. When the content falls within the range described above, the antifouling layer can express an antifouling effect sufficiently and express external appearance characteristics and mechanical characteristics sufficiently. When the content is too small, the antifouling layer may not express its antifouling effect sufficiently. When the content is too large, the external appearance of a final molded article or coating film may be poor, and the antifouling layer may be reduced in strength to be unable to maintain its antifouling property. Specifically, when the content of the silicone oil with respect to the silicone resin falls within the range of more than 50 wt% and 100 wt% or less (preferably from 60 wt% to 95 wt%, more preferably from 70 wt% to 90 wt%), the antifouling layer can express an antifouling effect sufficiently.

When the antifouling layer essentially contains a silicone oil and a liquid paraffin and further contains at least one kind selected from a surfactant, a liquid hydrocarbon, a fluorinated oil, and an antimicrobial agent, the content of the liquid paraffin with respect to the silicone resin is preferably from 1 wt% to 50 wt%. When the content falls within the range described above, the antifouling layer can sufficiently express an antifouling effect and express sufficient external appearance characteristics and mechanical characteristics. When the content is too small, the antifouling layer may not express an antifouling effect sufficiently. When the content is too large, the external appearance of a final molded article or coating film may be poor, and the antifouling layer may be reduced in strength to be unable to maintain its antifouling property.

When the antifouling layer essentially contains a silicone oil and a liquid paraffin and further contains a surfactant, the content of the surfactant with respect to the silicone resin is preferably from 1 wt% to 50 wt%. When the content falls within the range described above, the antifouling layer can sufficiently express an antifouling effect and express sufficient external appearance characteristics and mechanical characteristics. When the content is too small, the antifouling layer may not express an antifouling effect sufficiently. When the content is too large, the external appearance of a final molded article or coating film may be poor, and the antifouling layer may be reduced in strength to be unable to maintain its antifouling property.

When the antifouling layer essentially contains a silicone oil and a liquid paraffin and further contains a liquid hydrocarbon, the content of the liquid hydrocarbon with respect to the silicone resin is preferably from 1 wt% to 50 wt%. When the content falls within the range described above, the antifouling layer can sufficiently express an antifouling effect and express sufficient external appearance characteristics and mechanical characteristics. When the content is too small, the antifouling layer may not express an antifouling effect sufficiently. When the content is too large, the external appearance of a final molded article or coating film may be poor, and the antifouling layer may be reduced in strength to be unable to maintain its antifouling property.

When the antifouling layer essentially contains a silicone oil and a liquid paraffin and further contains a fluorinated oil, the content of the fluorinated oil with respect to the silicone resin is preferably from 1 wt% to 50 wt%. When the content falls within the range described above, the antifouling layer can sufficiently express an antifouling effect and sufficiently express external appearance characteristics and mechanical characteristics. When the content is too small, the antifouling layer may not express an antifouling effect sufficiently. When the content is too large, the external appearance of a final molded article or coating film may be poor, and the antifouling layer may be reduced in strength to be unable to maintain its antifouling property.

When the antifouling layer essentially contains a silicone oil and a liquid paraffin and further contains an antimicrobial agent, the content of the antimicrobial agent with respect to the silicone resin is preferably from 1 wt% to 50 wt%. When the content falls within the range described above, the antifouling layer can sufficiently express an antifouling effect and express sufficient external appearance characteristics and mechanical characteristics. When the content is too small, the antifouling layer may not express an antifouling effect sufficiently. When the content is too large, the external appearance of a final molded article or coating film may be poor, and the antifouling layer may be reduced in strength to be unable to maintain its antifouling property.

Any appropriate silicone oil may be adopted as the silicone oil to the extent that the effect of the present invention is not impaired. The silicone oil is preferably free of reactivity with the silicone resin or self-condensability. Any appropriate silicone oil may be adopted as such silicone oil to the extent that the effect of the present invention is not impaired. Such silicone oil is preferably incompatible with an organopolysiloxane in the silicone resin to some extent, and is preferably, for example, a silicone oil represented by the general formula (I) because the antifouling effect can be maintained over a long time period.

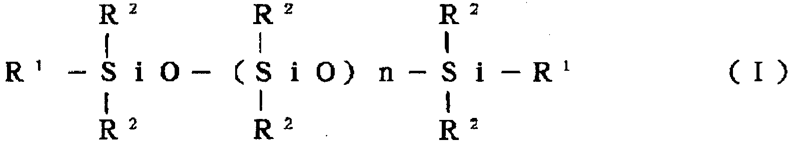

In the general formula (I), R¹'s may be identical to or different from each other, and each represent an alkyl group having 1 to 10 carbon atoms, an aryl group, an aralkyl group, a fluoroalkyl group, a polyether group, or a hydroxyl group, R²'s may be identical to or different from one another, and each represent an alkyl group having 1 to 10 carbon atoms, an aryl group, an aralkyl group, a polyether group, or a fluoroalkyl group, and n represents an integer of from 0 to 150. R¹'s in the general formula (I) each preferably represent a methyl group, a phenyl group, or a hydroxyl group. R²'s in the general formula (I) each preferably represent a methyl group, a phenyl group, or a 4-trifluorobutyl group.

The silicone oil represented by the general formula (I) has a number-average molecular weight of preferably from 180 to 20,000, more preferably from 1,000 to 10,000.

The silicone oil represented by the general formula (I) has a viscosity of preferably from 10 centistokes to 10, 000 centistokes, more preferably from 100 centistokes to 5,000 centistokes.

Specific examples of the silicone oil represented by the general formula (I) include: a terminal hydroxyl group-containing dimethyl silicone oil in which R¹ at each of both terminals or one terminal represents a hydroxyl group; a dimethyl silicone oil in which all of R¹'s and R²_{'}s each represent a methyl group; and a phenyl methyl silicone oil obtained by substituting part of the methyl groups of any such dimethyl silicone oil with phenyl groups.

As a commercial product of the silicone oil represented by the general formula (I), there are given, for example: KF96L, KF96, KF69, KF99, KF50, KF54, KF410, KF412, KF414, and FL manufactured by Shin-Etsu Chemical Co. , Ltd; and BY16-846, SF8416, SH200, SH203, SH230, SF8419, FS1265, SH510, SH550, SH710, FZ-2110, and FZ-2203 manufactured by Dow Corning Toray Co., Ltd.

Any appropriate liquid paraffin may be adopted as the liquid paraffin to the extent that the effect of the present invention is not impaired. Examples of the liquid paraffin include P-40, P-55, P-60, P-70, P-80, P-100, P-120, P-150, P-200, P-260, and P-350 manufactured by MORESCO Corporation and a hydrocarbon-based liquid paraffin manufactured by Wako Pure Chemical Industries, Ltd.

Examples of the surfactant include an anionic surfactant, a nonionic surfactant", an amphoteric surfactant, and a cationic surfactant.

Any appropriate anionic surfactant may be adopted as the anionic surfactant to the extent that the effect of the present invention is not impaired. Examples of such anionic surfactant include an alkylbenzenesulfonate, an alkyl or alkenyl ether sulfate, an alkyl or alkenylsulfate, an α-olefinsulfonate, an α-sulfofatty acid or α-sulfofatty acid ester salt, an alkanesulfonate, a saturated or unsaturated fatty acid salt, an alkyl or alkenyl ether carboxylate, an amino acid-type surfactant, an N-acylamino acid-type surfactant, an alkyl or an alkenylphosphate ester, and salts thereof. The number of kinds of the anionic surfactants may be only one, or may be two or more.

Any appropriate nonionic surfactant may be adopted as the nonionic surfactant to the extent that the effect of the present invention is not impaired. Examples of such nonionic surfactant include a polyoxyalkylene alkyl or alkenyl ether, a polyoxyethylene alkylphenyl ether, a higher fatty acid alkanolamide or an alkylene oxide adduct thereof, a sucrose fatty acid ester, an alkyl glycoside, a fatty acid glycerin monoester, and an alkylamine oxide. The number of kinds of the nonionic surfactants may be only one, or may be two or more.

Any appropriate amphoteric surfactant may be adopted as the amphoteric surfactant to the extent that the effect of the present invention is not impaired. Examples of such amphoteric surfactant include carboxy-type and sulfobetaine-type amphoteric surfactants. The number of kinds of the amphoteric surfactants may be only one, or may be two or more.

Any appropriate cationic surfactant may be adopted as the cationic surfactant to the extent that the effect of the present invention is not impaired. An example of such cationic surfactant is a quaternary ammonium salt. The number of kinds of the cationic surfactants may be only one, or may be two or more.

Any appropriate liquid hydrocarbon may be adopted as the liquid hydrocarbon to the extent that the effect of the present invention is not impaired. Examples thereof include hexane, heptane, benzene, toluene, xylene, and 1-tetradecene.

Any appropriate fluorinated oil may be adopted as the fluorinated oil to the extent that the effect of the present invention is not impaired. Examples of such fluorinated oil include perfluoropolyether, perfluorodecalin, and perfluoroocatane. Of those, perfluoropolyether is preferred from the viewpoint of chemical stability. An example of the perfluoropolyether is a compound represented by the structural formula: A-(C₃F₆O)x(CF₂O)y(C₂F₄O)z-B, where: a terminal group A represents any one of -F, -CF₃, -C₂F₅, -C₃F₇, -CF(CF₃)OCF₃, -OF, -OCF3, -OC₂F₅, -OC₃F₇, and -OCF(CF₃)OCF₃; a terminal group B represents any one of -CF₃, -C₂F₅, -C₃F₇, and -CF(CF₃)OCF₃; x, y, and z each represent 0 or a positive integer; a relationship of x+y+z>1 is satisfied; and the compound has a viscosity at 25°C of from 50 cs to 500,000 cs. Specific examples of the perfluoropolyether include CF₃O-(CF₂CF(CF₃)O)x(CF₂O)y-CF₃, where x and y are as described above, CF₃O-(CF₂O)y(C₂F₄O)z-CF₃, where y and z are as described above, CF₃O-(CF₂CF(CF₃)O)x-CF₃, where x is as described above, and F-(CF₂CF₂CF₂O)_{X}-C₂F₅, where x is as described above.

Any appropriate antimicrobial agent may be adopted as the antimicrobial agent to the extent that the effect of the present invention is not impaired. Examples of such antimicrobial agent include a so-called antimicrobial agent and a herbicide.

Examples of the so-called antimicrobial agent include azoxystrobin, benalaxyl, benomyl, bitertanol, bromuconazol, captafol, captan, carbendazim, chinomethionate, chlorothalonil, chlozolinate, cyprodinil, dichlofluanid, diclofen, diclomezine, dichloran, diethofencarb, dimethomorph, diniconazole, dithianon, epoxiconazole, famoxadone, fenarimol, fenbuconazol, fenfuram, fenpiclonil, fentin, fluazinam, fludioxonil, fluoroimide, fluquinconazole, flusulfamide, flutolanil, folpet, hexachlorobenzene, hexaconazole, imibenconazole, ipconazole, iprodione, kresoxim-methyl, manzeb, maneb, mepanipyrim, mepronil, metconazole, metiram, nickel bis(dimethyl dithiocarbamate), nuarimol, oxine copper, oxophosphoric acid, pencycuron, phthalide, procymidone, propineb, quintozene, sulfur, tebuconazole, teclofthalam, tecnazene, thifluzamide, thiophenate-methyl, thiram, tolclofos-methyl, tolylfluanid, triadimefon, triadimenol, triazoxide, triforine, triticonazole, vinclozolin, zineb, and ziram. In addition, examples of the antimicrobial agent which is a natural product include Chinese medicine ingredients such as a moso bamboo extract, hinokitiol, a garlic extract, and glycyrrhiza. In addition, examples thereof include inorganic antimicrobial agents such as silver, copper, zinc, tin, lead, and gold. In addition, for example, zeolite, hydroxyapatite, calcium carbonate, silica gel, aluminum calcium silicate, a polysiloxane compound, zirconium phosphate, zirconium sulfate, an ion exchanger, and zinc oxide may be used as a support for any such inorganic antimicrobial agent as required..Examples of the antimicrobial agent which is a synthetic product include 2-pyridinethiol-1-oxide, p-chloro-m-cresol, polyhexamethylene biguanide, hydrochloride, benzethonium chloride, an alkylpolyaminoethylglycine, benzisothiazolin, 5-chloro-2-methyl-4-isothiazolin-3-one, 1,2-benzisothiazolin-3-one, and 2,2'-dithio-bis-(pyridine-1-oxide).

Examples of the herbicide include bensulfuron-methyl, pyrazosulfuron-ethyl, imazosulfuron, cyclosulfamuron, ethoxysulfuron, flucetosulfuron, azimsulfuron, primisulfuron, prosulfuron, rimsulfuron, halosulfuron-methyl, nicosulfuron, thifensulfuron-methyl, tritosulfuron, foramsulfuron, amidosulfuron, chlorsulfuron, iodosulfuron, metsulfuron-methyl, sulfosulfuron, flazasulfuron, chlorimuron-ethyl, triflusulfuron-methyl, oxasulfuron, sulfometuron-methyl, trifloxysulfuron sodium, flupyrsulfuron-ethyl-sodium, imazamox, imazethapyr, imazaquin, imazapyr, imazapic, flucarbazone-sodium, propoxycarbazone-sodium, bispyribac-sodium, pyriftalid, pyriminobac-methyl, pyrimisulfan, pyrithiobac-sodium, flumetsulam, penoxsulam, metosulam, metazosulfuron, propyrisulfuron, bentazon, atrazine, simazine, dimethametryn, pyridate, pyridafol, terbuthylazine, terbutryn, bromoxynil, ioxynil, metribuzin, lenacil, bromacil, desmedipham, phenmedipham, metamitron, simetryn, prometryn, diuron, isouron, linuron, siduron, chlorotoluron, benzofenap, pyrazolate, pyrazoxyfen, benzobicyclon, isoxaflutole, tefuryltrione, tembotrione, isoxachlortole, mesotrione, sulcotrione, benzoylhexadione, pretilachlor, butachlor, cafenstrole, fentrazamide, mefenacet, etobenzanid, thenylchlor, flufenacet, indanofan, anilofos, metolachlor, metazachlor, alachlor, propachlor, piperophos, dimethenamid, acetochlor, napropamid, thiobencarb, molinate, benfuresate, pyributicarb, ethofumesate, esprocarb, prosulfocarb, dalapon, butyrate, pentoxazone, pyraclonil, oxadiazon, oxadiargyl, pyrazil, oxyfluorfen, acifluorfen, bifenox, pyraflufen-ethyl, fluazolate, fluthiacet-methyl, butafenacil, benzfendizone, carfentrazon-ethyl, sulfentrazone, flumioxazin, aclonifen, flumiclorac, prohexadione, sethoxydim, clethodim, tepraloxydim, alloxydim, fenoxaprop-P-ethyl, diclofop-methyl, fluazifop-P-butyl, quizalofop-P-ethyl, cyhalofop-butyl, glufosinate, glufosinate-P, bialaphos, glyphosate, glyphosate isopropylamine, sulfosate, picloram, triclopyr, clomeprop, MCPB, 2,4-D,MCPA, dicamba, quinchlorac, mecoprop, dichlorprop, diflufenican, flurtamone, picolinafen, fluridon, norflurazon, beflubutamid, flurochloridon, paraquat, diquat, butamifos, pendimethalin, trifluralin, dithiopyr, thiazopyr, amiprophos-methyl, bromobutide, cumyluron, dymron, isoxaben, dichlobenil, flupoxam, chlorthiamid, oxaziclomefone, ipfencarbazone, fenoxasulfone, SW-065, pelargonic acid, clomazone, and salts thereof.

Any appropriate antifouling agent may be adopted as the antifouling agent to the extent that the effect of the present invention is not impaired. Examples of such antifouling agent include a wax, petrolatum, animal fats, a fatty acid, a diatom adhesion preventing agent, an agricultural chemical, a pharmaceutical (such as medetomidine), enzyme activity inhibitors (such as an alkylphenol and an alkylresorcinol), and an organism repellent. The use of any such antifouling agent additionally improves a preventing effect on the adhesion of aquatic organisms such as a diatom or a barnacle.

The antifouling layer may contain any other appropriate additive to the extent that the effect of the present invention is not impaired. An example of such other additive is a UV absorbing agent as a weathering stabilizer. Specific examples of such UV absorbing agent include TINUVIN571, TINUVIN460, TINUVIN213, TINUVIN234, TINUVIN329, and TINUVIN326 manufactured by BASF. Such UV absorbing agent is added in an amount of preferably 0.5 wt% or more and less than 10 wt% with respect to the silicone resin. When the UV absorbing agent is added in an amount of less than 0.5 wt% with respect to the silicone resin, the effect as a weathering stabilizer may not be sufficiently expressed. When the UV absorbing agent is added in an amount of 10 wt% or more with respect to the silicone resin, the curing reaction of the silicone resin may be inhibited.

A filler or the like may be added to the antifouling layer in order to enhance strength. Examples of the filler include silica particles and diatomaceous earth. In addition, as the filler, particles having hydrophobically treated surfaces are preferred in terms of dispersibility. Examples of such surface treatment method include surface treatment methods with dimethylpolysiloxane, dimethyldichlorosilane, hexamethyldisilazane, cyclic dimethylsiloxane, or the like. The size of such particles having hydrophobically treated surfaces is preferably from 5 nm to 300 nm in terms of average particle diameter. When such particles having hydrophobically treated surfaces are too small, a sufficient strength may be unable to be imparted to the antifouling layer. When such particles having hydrophobically treated surfaces are too large, the particles may be unable to be homogeneously dispersed in the antifouling layer, with the result that a crack may be easily caused by an impact on the antifouling layer. Such particles having hydrophobically treated surfaces are added in an amount of preferably from 0.1 wt% to 10 wt% with respect to the silicone resin. When such particles having hydrophobically treated surfaces are added in an amount of less than 0.1 wt%, a sufficient strength may be unable to be imparted to the antifouling layer. When such particles having hydrophobically treated surfaces are added in an amount of more than 10 wt%, an antifouling layer formation material has an extremely high viscosity, with the result that the material including the antifouling agent and the like added may be unable to be homogeneously dispersed, or may be unable to be precisely applied when applied onto a base material layer. An example of such particles having hydrophobically treated surfaces is hydrophobic fumed silica manufactured by Nippon Aerosil Co. , Ltd., and specific examples thereof include an AEROSIL (trademark) RX series (RX50, RX200, RX300, and the like), an AEROSIL (trademark) RY series (RY50, RY200, RY200S, and the like), AEROSIL (trademark) NY50, an AEROSIL (trademark) NAX series, and an AEROSIL (trademark) R series manufactured by Nippon Aerosil Co., Ltd.

Any appropriate thickness may be adopted as the thickness of the antifouling layer depending on, for example, the applications and use environment of the pressure-sensitive adhesive tape for preventing adhesion of aquatic organisms of the present invention. The thickness of the antifouling layer is preferably from 5 µm to 500 µm. When the thickness falls within the range described above, the antifouling layer effectively expresses its antifouling effect for a sufficiently long time period, has excellent handleability, has reduced unevenness at a joint portion of the tape, and is hardly fouled. When the thickness of the antifouling layer is less than 5 µm, the layer may be impractical because the time period for which the antifouling layer effectively expresses its antifouling effect shortens. When the thickness of the antifouling layer is more than 500 µm, the pressure-sensitive adhesive tape for preventing adhesion of aquatic organisms of the present invention is thick and heavy, with the result that its handleability may deteriorate, unevenness at a joint portion of the tape may enlarge, and the tape may be liable to be fouled.

Any appropriate base material layer may be adopted as the base material layer to the extent that the effect of the present invention is not impaired. A material for such base material layer is preferably a material excellent in water resistance, strength, flexibility, and tearing property. As a material for such base material layer, there are given, for example, a polyurethane resin, a polyurethane acrylic resin, a rubber-based resin, a vinyl chloride resin, a polyester resin, a silicone resin, elastomers, a fluororesin, a polyamide resin, and polyolefin resins (such as polyethylene and polypropylene). The number of kinds of the materials for such base material layer may be only one, or may be two or more.

The base material layer preferably has an elongation of 100% or more, more preferably 120% or more, still more preferably 150% or more. When the elongation of the base material layer is 100% or more, the pressure-sensitive adhesive tape for preventing adhesion of aquatic organisms of the present invention can satisfactorily follow the shapes of various adherends. The tape can be satisfactorily bonded onto a flat surface, and can also be satisfactorily bonded onto, for example, a curved surface portion, a 90°-angle portion, and an acute angle portion which are found on the surface of a ship's hull. When the elongation of the base material layer is less than 100%, the tape cannot sufficiently follow the shapes of various adherends, and hence winkles and non-adhesion portions of an adhesive occur, which may cause poor external appearance and poor adhesion. The upper limit of the elongation of the base material layer is preferably 2,000% or less from the viewpoint of the strength of the base material layer.

The base material layer has a stress at break of preferably 10 MPa or more, more preferably 12 MPa or more, still more preferably 15 MPa or more. When the stress at break of the base material layer falls within the range described above, the base material layer can be suppressed from being cut upon peeling of the pressure-sensitive adhesive tape for preventing adhesion of aquatic organisms of the present invention which has already been used from the adherend. When the stress at break of the base material layer is less than 10 MPa, the base material layer is frequently cut upon peeling of the pressure-sensitive adhesive tape for preventing adhesion of aquatic organisms of the present invention which has already been used from the adherend, and hence working efficiency may remarkably deteriorate. The upper limit of the stress at break of the base material layer is preferably 200 MPa or less from the viewpoint of the handleability of the base material layer.

The base material layer has an elastic modulus of preferably 4,000 MPa or less, more preferably 1,000 MPa or less, still more preferably 100 MPa or less, particularly preferably 50 MPa or less. When the elastic modulus of the base material layer is 4,000 MPa or less, the pressure-sensitive adhesive tape for preventing adhesion of aquatic organisms of the present invention can satisfactorily follow the shapes of various adherends, which leads to an improvement in applicability. The lower limit of the elastic modulus of the base material layer is preferably 0.1 MPa or more from the viewpoint of the handleability of the base material layer.

The base material layer may contain any appropriate additive to the extent that the effect of the present invention is not impaired. Examples of such additive include an olefin-based resin, a silicone-based polymer, a liquid acrylic copolymer, a tackifier, an antioxidant, a hindered amine-based light stabilizer, a UV absorbing agent, an antioxidizing agent, an antistatic agent, polyethylene imine, a fatty acid amide, a fatty acid ester, a phosphoric acid ester, a lubricant, a surfactant, a filler, and a pigment (such as calcium oxide, magnesium oxide, silica, zinc oxide, titanium oxide, or carbon black).

The base material layer preferably contains a UV absorbing agent. When the base material layer contains the UV absorbing agent, the weatherability of the pressure-sensitive adhesive tape for preventing adhesion of aquatic organisms of the present invention improves. When the base material layer does not contain any UV absorbing agent, the base material is liable to deteriorate owing to sunlight in outdoor use and hence it may become difficult to maintain the original base material strength. In addition, when the base material deteriorates, the base material layer is frequently cut upon peeling of the pressure-sensitive adhesive tape for preventing adhesion of aquatic organisms of the present invention which has already been used from an adherend and hence working efficiency may remarkably deteriorate.

Any appropriate thickness may be adopted as the thickness of the base material layer depending on, for example, the applications and use environment of the pressure-sensitive adhesive tape for preventing adhesion of aquatic organisms of the present invention. The thickness of the base material layer is preferably from 1 µm to 1,000 µm, more preferably from 10 µm to 800 µm, still more preferably from 20 µm to 500 µm. When the thickness of the base material layer falls within the range described above, the pressure-sensitive adhesive tape for preventing adhesion of aquatic organisms of the present invention can be easily bonded to a portion except a flat surface, such as a curved surface or an acute angle surface, with good workability, and poor external appearance such as a wrinkle or floating hardly occurs in its surface after the bonding. When the thickness of the base material layer is too small, the layer cannot serve as the base material, which may be impractical. When the thickness of the base material layer is too large, the layer cannot sufficiently follow the shape of an adherend, unevenness at a joint portion of the tape enlarges, and dirt is liable to adhere.

A primer may be applied to the base material layer in advance or a silane coupling agent may be added to the layer in advance in order to improve its adhesiveness with the antifouling layer. When the antifouling layer contains a silicone resin, its adhesiveness with the base material layer may be low owing to low surface energy as a characteristic of the silicone resin. When the adhesiveness between the antifouling layer and the base material layer is low, the antifouling layer, which expresses an antifouling effect, peels from the base material layer owing to impact or physical damage during use, and hence may be unable to maintain its original antifouling effect. Accordingly, the primer can be applied to the surface of the base material layer in advance to improve the adhesiveness with the antifouling layer, or a silanol group or an alkoxysilane group that reacts with the silicone resin can be introduced into the base material layer by the silane coupling agent and subjected to a condensation reaction with a reactive group on the base material layer at the time of the application of a condensation-type silicone resin to improve the adhesiveness.

The number of kinds of the silane coupling agents may be only one, or may be two or more. Specific examples of the silane coupling agent which is commercially available include KBM5103, KBM1003, KBM903, KBM403, and KBM802 manufactured by Shin-Etsu Chemical Co. , Ltd.

When the base material layer contains the silane coupling agent, the content of the silane coupling agent in the base material layer is preferably from 0.01 wt% to 10 wt%. When the content of the silane coupling agent in the base material layer is set to fall within the range described above, the base material layer can be suppressed from being excessively hardened and sufficient adhesiveness can be expressed between the base material layer and the antifouling layer. When the content of the silane coupling agent in the base material layer exceeds 10 wt%, the silane coupling agent may serve as a cross-linking point to harden the base material layer. When the content of the silane coupling agent in the base material layer is less than 0.01 wt%, sufficient adhesiveness may not be expressed between the base material layer and the antifouling layer.

Any appropriate pressure-sensitive adhesive layer may be adopted as the pressure-sensitive adhesive layer to the extent that the effect of the present invention is not impaired. A material for such pressure-sensitive adhesive layer is, for example, an acrylic resin-based pressure-sensitive adhesive, an epoxy resin-based pressure-sensitive adhesive, an amino resin-based pressure-sensitive adhesive, a vinyl resin (e.g., vinyl acetate-based polymer)-based pressure-sensitive adhesive, a curable acrylic resin-based pressure-sensitive adhesive, or a silicone resin-based pressure-sensitive adhesive. The number of kinds of the materials for the pressure-sensitive adhesive layer may be only one, or may be two or more.

The pressure-sensitive adhesive layer has a 180° peel adhesive strength at 23°C and a tensile speed of 300 mm/min of preferably 30 N/20 mm or less, more preferably 20 N/20 mm or less, still more preferably 15 N/20 mm or less. When the 180° peel adhesive strength at 23°C and a tensile speed of 300 mm/min of the pressure-sensitive adhesive layer falls within the range described above, the pressure-sensitive adhesive tape for preventing adhesion of aquatic organisms of the present invention can be easily peeled from an adherend. When the pressure-sensitive adhesive layer has a 180° peel adhesive strength at 23°C and a tensile speed of 300 mm/min of more than 30 N/20 mm, it is difficult to peel the pressure-sensitive adhesive tape for preventing adhesion of aquatic organisms of the present invention which has already been used from an adherend, and hence working efficiency may remarkably deteriorate. The lower limit of the 180° peel adhesive strength at 23°C and a tensile speed of 300 mm/min of the pressure-sensitive adhesive layer is preferably 3 N/20 mm or more from the viewpoint that a sufficient pressure-sensitive adhesive strength can be maintained.

When the pressure-sensitive adhesive layer is brought into contact with seawater, the compressive elastic modulus of a portion of the pressure-sensitive adhesive layer brought into contact with seawater is preferably 1.1 times or more, more preferably 1.2 times or more, still more preferably 1.5 times or more as large as the compressive elastic modulus of the pressure-sensitive adhesive layer before the contact with seawater. When the pressure-sensitive adhesive layer is brought into contact with seawater, the compressive elastic modulus of the portion of the pressure-sensitive adhesive layer brought into contact with seawater is 1.1 times or more as large as the compressive elastic modulus of the pressure-sensitive adhesive layer before the contact with seawater, the layer can also express good adhesion in water. When the pressure-sensitive adhesive layer is brought into contact with seawater, the upper limit of the compressive elastic modulus of the portion of the pressure-sensitive adhesive layer brought into contact with seawater is preferably 100 times or less as large as the compressive elastic modulus of the pressure-sensitive adhesive layer before the contact with seawater from the viewpoint of handleability. The term "seawater" as used herein means commercially available simulated seawater (artificial seawater).

Any appropriate thickness may be adopted as the thickness of the pressure-sensitive adhesive layer depending on, for example, the applications and use environment of the pressure-sensitive adhesive tape for preventing adhesion of aquatic organisms of the present invention. The thickness of the pressure-sensitive adhesive layer is preferably 10 µm or more. When the thickness of the pressure-sensitive adhesive layer is less than 10 µm, there is a risk in that the layer cannot sufficiently follow the shape of an adherend, its adhesion area reduces, and the layer cannot express a sufficient pressure-sensitive adhesive strength. The upper limit of the thickness of the pressure-sensitive adhesive layer is preferably 100 µm or less from the viewpoint of handleability.

The pressure-sensitive adhesive tape for preventing adhesion of aquatic organisms of the present invention may be produced by any appropriate method. Examples of such method include: a method involving attaching the separately prepared base material layer and pressure-sensitive adhesive layer to each other, and then applying an antifouling layer formation material onto the base material layer to form the antifouling layer; a method involving applying a pressure-sensitive adhesive layer formation material onto one surface of the base material layer to form the pressure-sensitive adhesive layer, and applying the antifouling layer formation material onto the other surface of the base material layer to form the antifouling layer; and a method involving coextruding a base material layer formation material and the pressure-sensitive adhesive layer formation material to form a laminate of the base material layer and the pressure-sensitive adhesive layer, and then applying the antifouling layer formation material onto the base material layer to form the antifouling layer.

A method of applying the antifouling layer formation material onto the base material layer is, for example, a spray, brush application, a roller, a curtain flow, a roll, dipping, or a coater. The antifouling layer can be formed by applying the antifouling layer formation material onto the base material layer according to any such method and drying the material at, for example, a temperature ranging from room temperature to 250°C (preferably a temperature ranging from room temperature to 180°C). Specifically, in one preferred embodiment of the pressure-sensitive adhesive tape for preventing adhesion of aquatic organisms of the present invention, the antifouling layer formation material is applied onto the base material layer by means of a precision coater such as a comma coater.

### Examples

The present invention is specifically described below by way of Examples. However, the present invention is not limited thereto.

### <Evaluations of Elongation and Stress at Break>

The elongation and stress at break of the base material layer were measured by using a tensile strength tester (AUTOGRAPH AGS-X manufactured by Shimadzu Corporation) and analysis software (TRAPEZIUM X manufactured by Shimadzu Corporation) according to JIS K 7161, JIS J 7162, and JIS K 7127.

### <Measurement of 180° Peel Adhesive Strength>

The adhesive in the pressure-sensitive adhesive layer was transferred to a polyester film (trade name: "S-10" manufactured by Toray Industries, Inc. , thickness: 38 µm) by using a hand roller to produce a pressure-sensitive adhesive sheet with a base material. The sheet was cut to a test piece size of 80 mmx20 mm. As an adherend, a reinforced plastic FRP plate which was formed of an epoxy resin of 30 mmx100 mmx2 mm (thickness) and a glass fiber cloth was used. The test piece was attached to the adherend by reciprocating a 2-kg roller one round and left at 23°C for 30 minutes. Subsequently, the resulting test piece was measured for its initial 180° peel adhesive strength. The tensile speed was 300 mm/min.

### <Measurement of Compressive Elastic Modulus>

The pressure-sensitive adhesive tape was immersed in commercially available simulated seawater at room temperature for 7 days under the condition that the pressure-sensitive adhesive layer was brought into contact with seawater. The compressive elastic moduli of a portion brought into contact with the seawater before and after the immersion were compared. Evaluation was performed under the following conditions. The compressive elastic moduli were determined from a load displacement curve obtained by measurement using the attached analysis software.

Evaluation apparatus: Nano indenter: Tribo Scope manufactured by Hysitron Inc.
Indenter used: Berkovich, triangular pyramid type
Measurement method: single indentation measurement
Measurement temperature: 25°C
Indentation depth setting: about 1.1 µm

### <Outdoor Antifouling Test>

All pressure-sensitive adhesive tapes to be evaluated were each cut into a size of 10 cm in widthx15 cm in height and bonded to a vinyl chloride plate having substantially the same size. All of those plates (samples) were each further fixed onto a vinyl chloride plate of 23 cm in heightx42 cm in width. The units were placed 2 m below sea level at a float bridge of a yacht harbor near Gamagori-shi, Aichi prefecture. The units were left for 7 months and then visually evaluated. The evaluation criteria were as described below.
○ : State in which nearly no adhering organism is present, or even when an organism adheres, the organism can be peeled with a finger.
Δ : State in which an adhering organism adheres to about 20% of the surface.
×: State in which an adhering organism adheres to about 30% of the surface.
×× : State in which an adhering organism adheres to about 50% or more of the surface.

### [Production Example 1]

### <Production of Base Material Layer>

A product available under the trade name "Higress DUS451" (non-yellowing carbonate-based polyurethane elastomer sheet, thickness: 100 µm) manufactured by Sheedom Co., Ltd. was used as a base material layer.

The elongation and stress at break of the base material layer were evaluated, and as a result, the elongation was 1,500% and the stress at break was 60 MPa.

### [Production Example 2]

### <Production of Pressure-sensitive Adhesive Layer>

90 Parts by weight of 2-ethylhexyl acrylate (2EHA, manufactured by Toagosei Co. , Ltd.) and 10 parts by weight of acrylic acid (AA) as (meth)acrylic monomers, and 0.05 part by weight of 2,2-dimethoxy-1,2-diphenylethan-1-one (trade name: "IRGACURE 651" manufactured by BASF) as a photopolymerization initiator were loaded into a reaction vessel provided with a cooling tube, a nitrogen-introducing tube, a temperature gauge, and a stirring machine, and were dispersed. While the dispersion was stirred, UV light was applied from an upper portion in a stream of nitrogen to convert part of the monomers into a polymer, thereby adjusting the viscosity of the dispersion so that the dispersion could be applied. Thus, an acrylic monomer mixture was obtained. 0.08 Part by weight of 1,6-hexanediol diacrylate (HDDA) was added as a cross-linking agent to the acrylic monomer mixture, the mixture was applied to the surface of a separator (trade name: "MRF50" manufactured by Mitsubishi Plastics, Inc., thickness: 50 µm) with an applicator, a cover separator (trade name: "MRF38" manufactured by Mitsubishi Plastics, Inc., thickness: 38 µm) was attached to the mixture with a hand roller, and the resultant was irradiated with UV light from a UV lamp (BL type) (UV irradiance: 3.4 mW/cm², cumulative dose: 2,000 mJ/cm²) to provide a pressure-sensitive adhesive layer having a thickness of 50 µm.

The prepared pressure-sensitive adhesive layer was measured for its 180° peel adhesive strength at 23°C and a tensile speed of 300 mm/min, and as a result, the peel adhesive strength was 13.3 N/20 mm.

### [Example 1]

### <Preparation of Antifouling Layer Formation Material>

The other materials than resin, i.e., a silicone oil (KF96-100cs, a non-reactive silicone oil manufactured by Shin-Etsu Chemical Co., Ltd.), a liquid paraffin (hydrocarbon-based liquid paraffin manufactured by Wako Pure Chemical Industries, Ltd.), and a surfactant (polyoxyethylene lauryl ether, trade name "DKS NL-15" manufactured by DKS Co., Ltd.) were added to a container in a proportion shown in Table 1. Then, the mixture was stirred by using a homo-mixer. Subsequently, a silicone resin (KE1950-50, two-component addition-type resin manufactured by Shin-Etsu Chemical Co., Ltd.) was added to the stirred solution and the resultant solution was stirred by using a homo-mixer to dissolve or disperse the antifouling agent in the resin homogeneously. After the stirring, the resultant solution was filtered through a Cuno filter having a nominal diameter of 25 µm, followed by defoaming to obtain an antifouling layer formation material (1) for use in application to a base material layer.

### <Production of Pressure-sensitive Adhesive Tape>

The pressure-sensitive adhesive tape produced in Production Example 2 was bonded to the base material layer prepared in Production Example. 1 through transfer. Subsequently, the antifouling layer formation material (1) was applied onto the base material layer surface on the opposite side to the pressure-sensitive adhesive layer by an applicator and dried at 130°C for 5 minutes in an oven to produce a pressure-sensitive adhesive tape (1).

The construction of the pressure-sensitive adhesive tape (1) was an antifouling layer (thickness=100 µm)/base material layer (thickness=100 µm)/pressure-sensitive adhesive layer (thickness=50 µm).

The results of the evaluation are shown in Table 2.

### [Example 2]

### <Preparation of Antifouling Layer Formation Material>

The other materials than resin, i.e., a silicone oil (KF96-100cs, a non-reactive silicone oil manufactured by Shin-Etsu Chemical Co., Ltd.), a liquid paraffin (hydrocarbon-based liquid paraffin manufactured by Wako Pure Chemical Industries, Ltd.), and a liquid hydrocarbon 1-tetradecene, manufactured by Wako Pure Chemical Industries, Ltd.) were added to a container in a proportion shown in Table 1. Then, the mixture was stirred by using a homo-mixer. Subsequently, a silicone resin (KE1950-50, two-component addition-type resin manufactured by Shin-Etsu Chemical Co., Ltd.) was added to the stirred solution and the resultant solution was stirred by using a homo-mixer to dissolve or disperse the antifouling agent in the resin homogeneously. After the stirring, the resultant solution was filtered through a Cuno filter having a nominal diameter of 25 µm, followed by defoaming to obtain an antifouling layer formation material (2) for use in application to a base material layer.

### <Production of Pressure-sensitive Adhesive Tape>

The pressure-sensitive adhesive tape produced in Production Example 2 was bonded to the base material layer prepared in Production Example 1 through transfer. Subsequently, the antifouling layer formation material (2) was applied onto the base material layer surface on the opposite side to the pressure-sensitive adhesive layer by an applicator and dried at 130°C for 5 minutes in an oven to produce a pressure-sensitive adhesive tape (2).

The construction of the pressure-sensitive adhesive tape (2) was an antifouling layer (thickness=100 µm)/base material layer (thickness=100 µm)/pressure-sensitive adhesive layer (thickness=50 µm).

The results of the evaluation are shown in Table 2.

### [Example 3]

### <Preparation of Antifouling Layer Formation Material>

The other materials than resin, i.e., a silicone oil (KF96-100cs, a non-reactive silicone oil manufactured by Shin-Etsu Chemical Co., Ltd.), a liquid paraffin (hydrocarbon-based liquid paraffin manufactured by Wako Pure Chemical Industries, Ltd.), and a fluorinated oil (perfluoropolyether oil (average molecular weight: 4500), trade name "Demnum S-65" manufactured by Daikin Industries, Ltd.) were added to a container in a proportion shown in Table 1. Then, the mixture was stirred by using a homo-mixer. Subsequently, a silicone resin (KE1950-50, two-component addition-type resin manufactured by Shin-Etsu Chemical Co. , Ltd.) was added to the stirred solution and.the resultant solution was stirred by using a homo-mixer to dissolve or disperse the antifouling agent in the resin homogeneously. After the stirring, the resultant solution was filtered through a Cuno filter having a nominal diameter of 25 µm, followed by defoaming to obtain an antifouling layer formation material (3) for use in application to a base material layer.

### <Production of Pressure-sensitive Adhesive Tape>

The pressure-sensitive adhesive tape produced in Production Example 2 was bonded to the base material layer prepared in Production Example 1 through transfer. Subsequently, the antifouling layer formation material (3) was applied onto the base material layer surface on the opposite side to the pressure-sensitive adhesive layer by an applicator and dried at 130°C for 5 minutes in an oven to produce a pressure-sensitive adhesive tape (3).

The construction of the pressure-sensitive adhesive tape (3) was an antifouling layer (thickness=100 µm)/base material layer (thickness=100 µm)/pressure-sensitive adhesive layer (thickness=50 µm).

The results of the evaluation are shown in Table 2.

### [Example 4]

### <Preparation of Antifouling Layer Formation Material>

The other materials than resin, i.e., a silicone oil (KF96-100cs, a non-reactive silicone oil manufactured by Shin-Etsu Chemical Co., Ltd.), a liquid paraffin (hydrocarbon-based liquid paraffin manufactured by Wako Pure Chemical Industries, Ltd.), and an antimicrobial agent (Diuron, manufactured by Hodogaya Chemical Co., Ltd.) were added to a container in a proportion shown in Table 1. Then, the mixture was stirred by using a homo-mixer. Subsequently, a silicone resin (KE1950-50, two-component addition-type resin manufactured by Shin-Etsu Chemical Co., Ltd.) was added to the stirred solution and the resultant solution was stirred by using a homo-mixer to dissolve or disperse the antifouling agent in the resin homogeneously. After the stirring, the resultant solution was filtered through a Cuno filter having a nominal diameter of 25 µm, followed by defoaming to obtain an antifouling layer formation material (4) for use in application to a base material layer.

### <Production of Pressure-sensitive Adhesive Tape>

The pressure-sensitive adhesive tape produced in Production Example 2 was bonded to the base material layer prepared in Production Example 1 through transfer. Subsequently, the antifouling layer formation material (4) was applied onto the base material layer surface on the opposite side to the pressure-sensitive adhesive layer by an applicator and dried at 130°C for 5 minutes in an oven to produce a pressure-sensitive adhesive tape (4).

The construction of the pressure-sensitive adhesive tape (4) was an antifouling layer (thickness=100 µm)/base material layer (thickness=100 µm)/pressure-sensitive adhesive layer (thickness=50 µm).

The results of the evaluation are shown in Table 2.

**[Table 1]**

| | Added silicone resin (part(s) by weight) | Antifouling agent | | | | | |
|---|---|---|---|---|---|---|---|
| | | Added silicone oil (part(s) by weight) | Added liquid paraffin (part(s) by weight) | Added surfactant (part(s) by weight) | Added liquid hydrocarbon (part(s) by weight) | Added fluorinated oil (part(s) by weight) | Added antimicrobial agent (part(s) by weight) |
| Example 1 | 100 | 70 | 5 | 5 | | | |
| Example 2 | 100 | 70 | 5 | | 5 | | |
| Example 3 | 100 | 70 | 5 | | | 5 | |
| Example 4 | 100 | 70 | 5 | | | | 1 |

**[Table 2]**

| | Compressive elastic modulus | | |
|---|---|---|---|
| | Compressive elastic modulus of pressure-sensitive adhesive layer before contact with seawater (MPa) | Compressive elastic modulus of pressure-sensitive adhesive layer after contact with seawater (MPa) | Outdoor antifouling test (for 7 months) |
| Example 1 | 4.04 | 18.80 | ○ |
| Example 2 | 4.04 | 18.80 | ○ |
| Example 3 | 4.04 | 18.80 | ○ |
| Example 4 | 4.04 | 18.80 | ○ |

### Industrial Applicability

The pressure-sensitive adhesive tape for preventing adhesion of aquatic organisms of the present invention can be suitably utilized in an underwater structure (such as a ship, a buoy, a harbor facility, a maritime oil field facility, a waterway for power plant cooling water, a waterway for factory cooling water, or a water floating passage) because the tape can prevent aquatic organisms from adhering to the structure to proliferate.

### Reference Signs List

**1** release film
**2** antifouling layer
**3** base material layer
**4** pressure-sensitive adhesive layer
**100** pressure-sensitive adhesive tape for preventing adhesion of aquatic organisms

## Claims

1. A pressure-sensitive adhesive tape for preventing adhesion of aquatic organisms, comprising an antifouling layer, a base material layer, and a pressure-sensitive adhesive layer in the stated order, wherein:
the antifouling layer comprises a silicone resin;
the antifouling layer comprises an antifouling agent;
the antifouling agent essentially comprises a silicone oil and a liquid paraffin; and
the antifouling agent comprises at least one kind selected from a surfactant, a liquid hydrocarbon, a fluorinated oil, and an antimicrobial agent.

2. The pressure-sensitive adhesive tape for preventing adhesion of aquatic organisms according to claim 1, wherein the base material layer has an elongation of 100% or more and a stress at break of 10 MPa or more.

3. The pressure-sensitive adhesive tape for preventing adhesion of aquatic organisms according to claim 1 or 2, wherein the pressure-sensitive adhesive layer has a180°peel adhesive strength at 23°C and a tensile speed of 300 mm/min of 30 N/20 mm or less.

4. The pressure-sensitive adhesive tape for preventing adhesion of aquatic organisms according to any one of claims 1 to 3, wherein when the pressure-sensitive adhesive layer is brought into contact with seawater, a compressive elastic modulus of a portion of the pressure-sensitive adhesive layer brought into contact with seawater is 1.1 times or more as large as a compressive elastic modulus of the pressure-sensitive adhesive layer before the contact with seawater.
